(19)

**Europäisches Patentamt**

**European Patent Office**

**Office européen des brevets**

(11) **EP 3 872 719 A1**

(12) **EUROPÄISCHE PATENTANMELDUNG**

(43) Veröffentlichungstag:
01.09.2021 Patentblatt 2021/35

(51) Int Cl.:
*G06Q 10/04* (2012.01)  *G06Q 50/06* (2012.01)
*H02J 3/00* (2006.01)  *G06Q 10/06* (2012.01)

(21) Anmeldenummer: 20159803.4

(22) Anmeldetag: 27.02.2020

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Dölle, Oliver
06108 Halle (DE)**
• **Niessen, Stefan
91056 Erlangen (DE)**
• **Schreck, Sebastian
90429 Nürnberg (DE)**
• **Thiem, Sebastian
91413 Neustadt an der Aisch (DE)**

(54) **VERFAHREN ZUR ERMITTLUNG EINES AUSFALLRISIKOS**

(57)    Es wird ein Verfahren zur Ermittlung eines Ausfallrisikos einer von einem Energiesystem (4) im Rahmen eines Angebotes innerhalb eines Zeitbereiches bereitzustellende und/oder zu verbrauchende Energiemenge in Abhängigkeit von Risiken, die mittels Daten (101,...,105) aus dem Energiesystem (4) selbst und/der dem Energiesystem (4) aus seiner Umgebung zufließenden Daten (101,...,105) bestimmt werden, vorgeschlagen, wobei das Energiesystem (4) die Daten (101,...,105) erfasst und/oder verarbeitet und an eine Energiemarktplattform (2) zur Ermittlung des Ausfallrisikos übermittelt, wobei
- das Energiesystem (4) wenigstens Messdaten (101) bezüglich vergangener Energieaustausche sowie Daten (102) bezüglich der Art und Anzahl von technischen Anlagen des Energiesystems (4) an die Energiemarktplattform (2) übermittelt;
- durch die Energiemarktplattform (2) basierend auf den übermittelnden Daten (101, 102) für das Energiesystem (4) eine probabilistische Vorhersage bezüglich der im Zeitbereich zu erwartenden Energiebereitstellung und/oder den zu erwartenden Energieverbrauch berechnet wird; und
- das Ausfallrisiko für den Zeitbereich basierend auf der probabilistischen Vorhersage ermittelt wird.

Weiterhin betrifft die Erfindung eine Energiemarktplattform (2) .

FIG 1

EP 3 872 719 A1

**Beschreibung**

Die Erfindung betrifft ein Verfahren zur Ermittlung eines Ausfallrisikos einer von einem Energiesystem innerhalb eines Zeitbereiches bereitzustellenden und/oder zu verbrauchenden Energiemenge in Abhängigkeit von einzelnen Risiken, die datenbasiert bestimmt werden. Weiterhin betrifft die Erfindung eine Energiemarktplattform mittels welcher ein solches Ausfallrisiko ermittelbar ist.

Durch einen lokalen Energiemarkt können Energiewandler, Energieverbraucher und Prosumer lokal Energie, insbesondere elektrische Energie (Strom), untereinander austauschen und handeln. Hierbei ermöglicht es der lokale Energiemarkt durch seine dezentrale technische Ausgestaltung eine lokal gewonnene Energie ebenfalls lokal zu verbrauchen. Insbesondere ermöglicht es ein solcher lokaler Energiemarkt erneuerbar gewonnene Energien lokal und unabhängig von einem übergeordneten Anbieter zwischen den Anlagenbetreibern auszutauschen und zu handeln. Technisch wird ein solcher lokaler Energiemarkt mittels einer lokalen Steuerungsplattform, die ebenfalls als Energiemarktplattform bezeichnet werden kann, verwirklicht. Diese ermöglicht einen vom konventionellen Energiemarkt, beispielsweise einer Strombörse, unabhängigen lokalen Energieaustausch zwischen lokalen Energiewandlern, lokalen Verbrauchern und lokalen Prosumern. Energiewandler können umgangssprachlich als Energieerzeuger bezeichnet werden, wobei sich hierbei der Begriff der Erzeugung auf die bereitgestellte Energieform, beispielsweise elektrischer Strom bei Stromerzeugern, bezieht.

Ein lokaler Energiemarkt ist beispielsweise aus dem Dokument EP 3518369 A1 bekannt.

Für eine Teilnahme von kleineren Prosumern, beispielsweise von privaten Haushalten, an einem lokalen Energiemarkt bestehen mehrere Herausforderungen. Eine wesentliche Herausforderung ist, dass Vorhersagen über den zu erwartenden Energieaustausch für kleinere Energiesysteme größere Ungenauigkeiten aufweisen. Die Vorhersagen sind jedoch, beispielsweise für einen Day-Ahead Energiehandel, grundsätzlich erforderlich. Typischerweise wird für größere Energiesysteme, beispielsweise für Wohnsiedlungen, ein Standardlast- und/oder Standarderzeugungsprofil näherungsweise verwendet. Für einzelne Haushalte sind diese Standardprofile aufgrund von stochastischen Prozessen, beispielsweise das Einschalten des Staubsaugers, eine deutlich schlechtere Näherung. Mit anderen Worten dominieren stochastische Prozesse das Bedarfsprofil beziehungsweise Lastprofil eines Haushalts. Dadurch ergeben sich im Wesentlichen zwei Schwierigkeiten.

Zum einen können zusätzliche Kosten für die Prosumer entstehen, die eine geringere Energiemenge als vorab angeboten bereitstellen, da die Differenz durch Reserveenergie, beispielsweise aus einem bezüglich des Energiemarktes übergeordneten Stromnetz, bezogen werden muss.

Zum anderen könnte ein Prosumer aufgrund einer fehlerhaften Lastvorhersage weniger Energie, als er zuvor dem lokalen Energiemarkt übermittelt hat, beziehen. Hierbei entstehen für den Prosumer zusätzliche Kosten, falls er für die vorab übermittelte gesamte Energiemenge ein Entgelt bezahlen müsste.

Technisch wird die energetische Effizienz des lokalen Energiemarktes durch die zwei genannten Schwierigkeiten verringert, da entweder stets Reserveenergie bereitgestellt werden muss und/oder lokal gewonnene Energie nicht genutzt wird.

Eine Möglichkeit zur Vermeidung der oben genannten Probleme ist es Energiereserven vorzusehen, beispielsweise lediglich 75 Prozent einer prognostizierten beziehungsweise vorhergesagten Photovoltaikerzeugung für den lokalen Handel bereitzustellen. Hierdurch würde jedoch die Effizienz des lokalen Energieaustausches nicht vollständig ausgeschöpft werden.

Weiterhin würde dadurch der Ausbau erneuerbarer Energien behindert.

Aus der Patentschrift EP 0700009 B1 ist ein Verfahren zur Ermittlung des Betriebsrisikos einzelner Kraftfahrzeuge bekannt.

Der vorliegenden Erfindung liegt die Aufgabe zugrunde, die Unsicherheit eines Energieaustausches (Ausfallrisiko) innerhalb eines Energiemarktes zu bestimmen, wodurch die energetische Effizienz des Energiemarktes verbessert wird.

Die Aufgabe wird durch ein Verfahren mit den Merkmalen des unabhängigen Patentanspruches 1 sowie durch eine Energiemarktplattform mit den Merkmalen des unabhängigen Patentanspruches 8 gelöst. In den abhängigen Patentansprüchen sind vorteilhafte Ausgestaltungen und Weiterbildungen der Erfindung angegeben.

Bei dem erfindungsgemäßen Verfahren zur Ermittlung eines Ausfallrisikos einer von einem Energiesystem im Rahmen eines Angebotes innerhalb eines Zeitbereiches bereitzustellenden und/oder zu verbrauchenden Energiemenge werden in Abhängigkeit von Risiken, die mittels Daten, insbesondere technischen Daten, aus dem Energiesystem selbst und/der dem Energiesystem aus seiner Umgebung zufließenden Daten, insbesondere technischen Daten, bestimmt werden, diese Daten durch das Energiesystem erfasst und/oder verarbeitet und an eine Energiemarktplattform zur Ermittlung des Ausfallrisikos übermittelt, wobei

- das Energiesystem wenigstens Messdaten bezüglich vergangener Energieaustausche sowie Daten bezüglich der Art und/oder Anzahl von technischen Anlagen des Energiesystems an die Energiemarktplattform übermittelt;
- durch die Energiemarktplattform basierend auf den übermittelnden Daten für das Energiesystem eine probabilistische Vorhersage bezüglich der im Zeitbereich zu erwartenden Energiebereitstellung und/oder den zu erwartenden Energieverbrauch berechnet wird; und
- das Ausfallrisiko für den Zeitbereich basierend auf der probabilistischen Vorhersage ermittelt wird.

Das erfindungsgemäße Verfahren oder ein oder mehrere Funktionen, Merkmale und/oder Schritte des erfindungsgemäßen Verfahrens können computergestützt sein.

Energie kann durch eine Energiegewinnung, beispielsweise mittels eines Energiewandlers, und/oder durch einen Energiespeicher bereitgestellt werden. Der Begriff des Energieverbrauchs umfasst jede Art von Verbrauch an bereitgestellter Energie, insbesondere ebenfalls eine Speicherung von Energie (Energiespeicherung).

Durch eine Leistung innerhalb eines Zeitbereiches ergibt sich eine bestimmte Energie beziehungsweise Energiemenge in diesem Zeitbereich, die bereitgestellt und/oder verbraucht beziehungsweise ausgetauscht wird. In diesem Sinne sind die Begriffe Energie und Leistung in der vorliegenden Erfindung äquivalent und sind somit untereinander austauschbar.

Das Ausfallrisiko kennzeichnet die Wahrscheinlichkeit für eine Abweichung von dem vorgesehen beziehungsweise vereinbarten Energieaustauch. Hierbei muss insbesondere kein vollständiger Ausfall des Energieaustausches vorliegen. Somit kann das Ausfallrisiko ebenfalls als Abweichungsrisiko bezeichnet werden. Im Hinblick auf den Betrieb eines lokalen Energiemarktes kann das Ausfallrisiko weiterhin als Betriebsrisiko bezeichnet werden.

Energiesysteme umfassen typischerweise mehrere Komponenten, insbesondere energietechnische Anlagen, beispielsweise Energiewandlungsanlagen, Verbrauchsanlagen und/oder Speicheranlagen. Multimodale Energiesysteme sind Energiesysteme, die mehrere Energieformen bereitstellen. Insbesondere stellt ein multimodales Energiesystem für einen Energieverbraucher, beispielsweise ein Gebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung/Gewinnung und/oder ihrer Speicherung gekoppelt.

Als energietechnische Anlagen kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, industrielle Anlagen, konventionelle Kraftwerke und/oder dergleichen.

Gemäß der vorliegenden Erfindung wird das Ausfallrisiko eines Energieaustausches, das heißt einer durch das Energiesystem bereitzustellenden und/oder zu verbrauchenden Energiemenge (innerhalb des genannten Zeitraumes) basierend auf Messdaten und basierend auf der Art und/oder Anzahl der technischen Anlagen des Energiesystems, insbesondere basierend auf der Art und/oder Anzahl der energietechnischen Anlagen, ermittelt. Zur Ermittlung des Ausfallrisikos wird eine probabilistische Vorhersage für den zu erwartenden Energieaustausch verwendet. Mit anderen Worten kann durch die probabilistische Vorhersage, die auf den genannten technischen Daten basiert, eine Risikoabschätzung erfolgen. Beispielsweise erfolgt dies durch ein Wahrscheinlichkeit-Energiemengen-Tupel

$$[\zeta_1 = 90\,\%, P_{t,n,k}^{S,\zeta_1} \le \quad 1500 \quad \text{W}],$$

$$[\zeta_2 = 80\,\%, \quad P_{t,n,k}^{S,\zeta_2} \le 1800\ \text{W}], \quad \ldots, [\zeta_9 = 10$$

$$\%, P_{t,n,k}^{S,\zeta_9} \le 2800\ \text{W}].$$ Hierbei kennzeichnet $t$ einen Zeitschritt, $n$ einen Netzknoten, $k$ einen Teilnehmer, $S$ eine Bereitstellung der Energiemenge (englisch: Sell) und $\zeta_s$ die Wahrscheinlichkeit für das Quantil $s$.

Alternativ oder ergänzend können die einzelnen Energiesysteme basierend auf ihrem ermittelten Ausfallrisiko klassifiziert werden. Dies ist analog zu klassischen Versicherungsmodellen. Mit anderen Worten ist die vorliegende Erfindung insbesondere im Dienstleistungssektor vorteilhaft, insbesondere im Versicherungsgewerbe, da basierend auf dem ermittelten technischen Ausfallrisiko ein Versicherungsbetrag für das eine oder für mehrere Energiesysteme individuell oder gemeinschaftlich berechnet werden kann. Mit anderen Worten stellt die vorliegende Erfindung den technischen Rahmen für eine solche Versicherung, bei welcher Unsicherheiten bezüglich des Energieaustausches, versichert werden, bereit.

Die Risiken werden mittels der übermittelten Daten ermittelt. Diese einzelnen Risiken, beispielsweise für verschiedene Arten von Anlagen, werden zur Ermittlung eines bezüglich des Energiesystems ganzheitlichen Ausfallrisikos verwendet.

Durch die Ermittlung des Ausfallrisikos verringern sich zudem die Kosten der Teilnehmer beziehungsweise des oder der Energiesysteme am Energiemarkt. Weiterhin wird die Ressourceneffizienz verbessert, da mehr erneuerbare Energie genutzt und das Potential des Energiemarktes mehr ausgeschöpft werden kann. Zudem wird der Energiemarkt insgesamt bezüglich seiner volatilen Energiequellen stabilisiert, sodass bezüglich des Energiemarktes übergeordnete Stromnetze, die Energie beziehungsweise Leistung zum Ausgleich bereitstellen und/oder aufnehmen müssten, entlastet werden.

Ein weiterer Vorteil der vorliegenden Erfindung ist, dass Reservekapazitäten verbessert abgeschätzt beziehungsweise verbessert bestimmt werden können.

Die erfindungsgemäße Energiemarktplattform ist dazu ausgestaltet, Angebote von mehreren Energiesystemen für eine jeweilige innerhalb eines Zeitbereiches bereitzustellende und/oder zu verbrauchende Energiemenge von den Energiesystemen zu empfangen und basierend auf den empfangenen Angeboten den Energieaustausch zwischen den Energiesystemen zu steuern, wobei die Energiemarktplattform weiterhin dazu ausgestaltet ist, ein jeweiliges Ausfallrisiko einer von einem der Energiesysteme im Rahmen des zugehörigen Angebotes bereitzustellende und/oder zu verbrauchende Energiemenge in Abhängigkeit von Risiken zu ermitteln, wobei die Risiken mittels Daten aus den Energiesystemen selbst und/der den Energiesystemen aus ihrer Umgebung zufließenden Daten bestimmt werden, wobei jedes der Energiesysteme die jeweiligen Daten erfasst und/oder verarbeitet und an die Energiemarktplattform zur Ermittlung des Ausfallrisikos übermittelt, wobei

- jedes Energiesystem wenigstens Messdaten bezüglich vergangener Energieaustausche sowie Daten bezüglich der Art und Anzahl ihrer technischen Anlagen an die lokale Energiemarktplattform übermittelt; wobei

- die lokale Energiemarktplattform dazu ausgestaltet ist, basierend auf den übermittelnden Daten für das jeweilige Energiesystem oder für die Energiesysteme eine probabilistische Vorhersage bezüglich der im Zeitbereich zu erwartenden Energiebereitstellung und/oder den zu erwartenden Energieverbrauch zu berechnen; und

- das Ausfallrisiko für den Zeitbereich basierend auf der probabilistischen Vorhersage zu ermitteln.

Es ergeben sich zum erfindungsgemäßen Verfahren gleichartige und gleichwertige Vorteile und/oder Ausgestaltungen.

Gemäß einer vorteilhaften Ausgestaltung der Erfindung wird ein Zeitbereich von einer Stunde, von höchstens 30 Minuten, insbesondere von höchstens 15 Minuten, verwendet.

Mit anderen Worten wird für jede Stunde, für jede halbe Stunde oder für jede 15 Minuten eines Tages, insbesondere des kommenden Tages, das Ausfallrisiko ermittelt. Das ist deshalb von Vorteil, da Angebote für eine bereitzustellende Energiemenge oder eine zu verbrauchende Energiemenge, das heißt Angebote für einen Energieaustausch, an einem Energiemarkt bevorzugt in 15-Minuten-Abständen gehandelt werden. Mit anderen Worten übermittelt jedes am Energiemarkt teilnehmende Energiesystem die Energiemenge, welche das jeweilige Energiesystem innerhalb des Zeitbereiches bereitstellen und/oder verbrauchen möchte, sowie einen zugehörigen minimalen beziehungsweise maximalen Preis, sowie die gemäß der vorliegenden Erfindung technischen Daten zur Ermittlung des Ausfallrisikos bevorzugt alle 15 Minuten an den Energiemarkt. Die zum Energiemarkt zugehörige Energiemarktplattform bringt die verschiedenen Angebote für Bereitstellung und Verbrauch möglichst optimal mittels eines Optimierungsverfahrens in Übereinstimmung und ermittelt gemäß der vorliegenden Erfindung basierend auf den übermittelten technischen Daten das oder die zugehörigen Ausfallrisiken. Dadurch könnten anschließend entsprechende Versicherungskosten für die einzelnen Energiesysteme berechnet werden.

In einer vorteilhaften Weiterbildung der Erfindung übermittelt das Energiesystem ergänzend Wetterdaten, beispielsweise Wettervorhersagen, anlagenspezifische Daten, Leistungsbeschränkungen, von Anlagen und/oder Netzen, und/oder vergangene Angebote an die Energiemarktplattform, und die Energiemarktplattform verwendet diese zusätzlich zur Berechnung der probabilistischen Vorhersage.

Als Wetterdaten werden insbesondere Temperatur, Windgeschwindigkeit und Windrichtung, Luftfeuchtigkeit, Sonnenstunden und/oder lokale oder globale horizontale Einstrahlung verwendet. Weiterhin können vergangene Messwerte bezüglich der Wetterdaten, das heißt historische Wetterdaten, verwendet werden. Die Wetterdaten können vom Energiesystem selbst, und/oder extern für das Energiesystem bereitgestellt werden.

Weiterhin werden bevorzugt Leistungsbeschränkungen der einzelnen Anlagen und/oder des Energiesystems insgesamt, beispielsweise des Netzanschlusspunktes des Energiesystems, berücksichtigt.

Zusammenfassend wird durch die genannten übermittelten Daten die Berechnung der probabilistischen Vorhersage verbessert.

Gemäß einer vorteilhaften Ausgestaltung der Erfindung wird die probabilistische Vorhersage mittels eines probabilistischen Vorhersagemodells, insbesondere mittels einer Quantilsregression, ermittelt.

Mit anderen Worten erfolgt vorteilhafterweise mittels einer Quantilsregression eine probabilistische Vorhersage der Energiebereitstellung, insbesondere der Energiegewinnung, und des Energieverbrauchs des Energiesystems. Hierbei werden wenigstens die zugehörigen Erwartungswerte und Varianzen, besonders bevorzugt die statistische Verteilung (Wahrscheinlichkeitsverteilung) der Energiebereitstellung, insbesondere der Energiegewinnung, sowie die statistische Verteilung des Energieverbrauchs, mittels des Vorhersagemodells berechnet. Als Ergebnis der Quantilsregression kann ein Wahrscheinlichkeit-Energiemenge-Tupel der Form [$\zeta_1 = 90$ %, $P^{S,\zeta_1}_{t,n,k} \leq 1500$ W], [$\zeta_2 = 80$ %, $P^{S,\zeta_2}_{t,n,k} \leq 1800$ W], ..., [$\zeta_9 = 10$ %,

$$P_{t,n,k}^{S,\zeta_9} \le 2800\,\text{W}],$$

beispielsweise für die Vorhersage für 12:00 Uhr Mittag, insbesondere für jede Stunde eines Tages, vorliegen. Das genannte Tupel gibt vorliegend die Wahrscheinlichkeit an, dass die Leistung unterhalb eines bestimmten Wertes liegt. So beträgt für das genannte Beispiel die Wahrscheinlichkeit, dass die Leistung einer Anlage kleiner oder gleich 1800 Watt ist, 80 Prozent. Äquivalent wird dadurch innerhalb des Zeitbereiches eine auszutauschende Energiemenge bestimmt, sodass das Tupel ebenfalls die Wahrscheinlichkeit für einen Energieaustausch, der kleiner oder gleich einem festgelegten Schwellenwert ist, kennzeichnet.

Wenigstens basierend auf der berechneten probabilistischen Vorhersage kann eine Bewertung des technischen Risikos (Ausfallrisiko) eines wenigstens teilweisen Ausfalls einer Energiemenge erfolgen. Diese Risikoabschätzung wird weiterhin zur Ermittlung von Versicherungskosten und zugehörigen Energiemengen-Tupel herangezogen.

In einer vorteilhaften Weiterbildung der Erfindung wird ein energiesystemspezifischer Zuverlässigkeitswert für vergangene Angebote berechnet, und es wird der berechnete Zuverlässigkeitswert zur Ermittlung des Ausfallrisikos verwendet.

Vorteilhafterweise wird durch den Zuverlässigkeitswert eine bisherige Liefertreue des Energiesystems quantifizierbar und dadurch berücksichtigbar. Mit anderen Worten wird mittels des Zuverlässigkeitswertes, insbesondere einem Vergessensfaktor, die Liefertreue des Energiesystems in der Vergangenheit berechnet. Diese berechnete bisherige Liefertreue wird vorteilhafterweise ergänzend zur probabilistischen Vorhersage zur Einschätzung des Ausfallrisikos verwendet.

Gemäß einer vorteilhaften Ausgestaltung der Erfindung werden zur Ermittlung des Ausfallrisikos an die lokale Energiemarktplattform durch weitere Energiesysteme übermittelte Daten berücksichtigt, wobei hierzu positive und negative Unsicherheiten bezüglich der zwischen mehreren Energiesystemen auszutauschenden Energiemengen aggregiert werden.

Mit anderen Worten erfolgt die Risikobewertung, das heißt die Ermittlung oder Berechnung des Ausfallrisikos gesamtheitlich für mehrere, insbesondere für alle, am Energiemarkt teilnehmenden Energiesysteme. Dadurch können sich Risiken gegenseitig kompensieren und Problemfälle, die ein vergleichbar hohes Ausfallrisiko aufweisen, sind gesamtheitlich weniger deutlich ausgeprägt beziehungsweise spielen eine geringere Rolle. Aufgrund der genannten vorteilhaften Mittelung kommt es ganzheitlich betrachtet über den Energiemarkt zu geringen Aufwendungen und Kosten. Dadurch wird der technische Ausbau erneuerbarer Energien gefördert, da diese typischerweise im Vergleich zu konventionellen Energien, ein größeres Ausfallrisiko aufweisen. Vergleichbar zu einer Versicherung werden somit diese höheren Ausfallrisiken auf alle teilnehmenden Energiesysteme verteilt. Infolgedessen steigert sich die lokale Ressourceneffizienz, da mehr erneuerbare Energien genutzt und das technische Potential des lokalen Energiemarktes besser ausgeschöpft wird.

In einer vorteilhaften Weiterbildung der Erfindung wird das ermittelte Ausfallrisiko zur Berechnung eines Versicherungsbeitrages für das eine oder mehrere Energiesysteme verwendet.

Dadurch wird vorteilhafterweise das einzelne energiesystemspezifische Ausfallrisiko abgesichert, sodass der Ausbau von erneuerbaren Energien verbessert gefördert wird. Hierbei kann der Energiemarkt als Versicherungsunternehmen und die Energiesysteme als Versicherungsnehmer bezeichnet werden. Die vorliegende Erfindung bildet somit die technische Grundlage für eine solche Beitragsberechnung.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1    eine Darstellung eines lokalen Energiemarktes mit zusätzlicher Unsicherheitsberechnung;

Figur 2    eine Darstellung einer Risikoabschätzung; und

Figur 3    eine probabilistische Vorhersage für eine Photovoltaikanlage.

Gleichartige, gleichwertige oder gleichwirkende Elemente können in einer der Figuren oder in den Figuren mit denselben Bezugszeichen versehen sein.

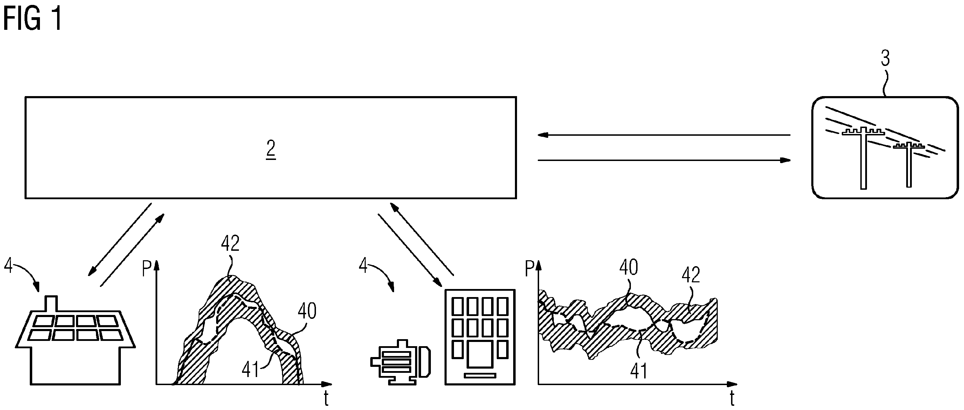

Die Figur 1 zeigt eine schematische Darstellung eines lokalen Energiemarktes mit zusätzlicher Unsicherheitsberechnung, das heißt eine lokalen Energiemarktplattform 2 mit einer zusätzlichen Unsicherheitsoption.

Hierbei sind die Energiemarktplattform 2 sowie mehrere Energiesysteme 4 dargestellt. Die Energiesysteme 4 tauschen Angebote für eine Energiebereitstellung, insbesondere für eine Energiegewinnung, und/oder einem Energieverbrauch, insbesondere einer Energiespeicherung, mit der lokalen Energiemarktplattform 2 aus.

Jedes der dargestellten Energiesysteme 4 weist wenigstens über einen Zeitbereich eine Vorhersage 40 bezüglich seines Leistungsverlaufes auf, wobei die Leistung negative oder positive Werte annehmen kann. Wird eine Leistung bezogen, so ist die Leistung positiv. Wird eine Leistung in das Stromnetz eingespeist, so weist diese negative Werte auf. Es wird somit das Verbraucherzählpfeilsystem verwendet. Die jeweilige Vorhersage 40 kann durch das Energiesystem 4 selbst und/oder einem externen Anbieter bereitgestellt werden. Besonders bevorzugt weist das Energiesystem 4 ein Energiemanagementsystem auf, welches dazu ausgebildet ist, die Vorhersage 40 für den Zeitbereich zu berechnen.

Basierend auf der berechneten Vorhersage 40 ermittelt das Energiesystem 4 Angebote bezüglich einer innerhalb des Zeitbereiches bereitzustellenden und/oder zu verbrauchenden Energiemenge. Die Energiemenge beziehungsweise entsprechend die zugehörige Leistung wird bevorzugt durch weitere Energiesysteme 4 bereitgestellt beziehungsweise verbraucht. Das Angebot umfasst somit die technischen Daten, welche Energiemenge das Energiesystem 4 innerhalb des Zeitbereiches voraussichtlich bereitstellt, das heißt vorliegend einspeist, oder verbraucht. Teil des Angebotes kann ergänzend ein minimaler oder maximaler Preis für das Bereitstellen (Liefern) beziehungsweise für das Verbrauchen (Beziehen) der Energiemenge sein.

Da die Vorhersage 40 eine Unsicherheit aufweist, weicht der tatsächliche Leistungsverlauf 41 von der Vorhersage 40 und somit vom ursprünglichen Angebot, welches an die Energiemarktplattform 2 übermittelt wurde, ab. Mit anderen Worten ergibt sich eine Differenz, die in den Diagrammen als schraffierte Fläche gekennzeichnet ist. Diese Differenz führt dazu, dass die Energiemarktplattform 2 beziehungsweise der gesamte Energiemarkt mit einer geringeren Effizienz betrieben wird, da ein Vorhalten von mehr positiver und/oder negativer Reserveenergie erforderlich ist. Typischerweise wird die genannte Reserveenergie von einem bezüglich dem lokalen Energiemarkt externen Stromnetz 3 bereitgestellt. Dies führt weiterhin zu zusätzliche Kosten für die teilnehmenden Energiesysteme 4. Weiterhin wird dadurch der Ausbau erneuerbarer Energien, die typischerweise erhöhte Unsicherheiten bezüglich ihrer Energiegewinnung aufweisen, behindert.

Die vorliegende Erfindung löst die Schwierigkeit dadurch, dass ein Ausfallrisiko für die Energiesysteme 4 durch die Energiemarktplattform 2 berechnet beziehungsweise ermittelt wird. Das ermittelte Ausfallrisiko wird dann bei der Optimierung des Energieaustausches und/oder bei den einzelnen energiesystemspezifischen Entgelten für den Energieaustausch berücksichtigt. Ein weiterer Grundgedanke der vorliegenden Erfindung ist hierbei, dass das berechnete Ausfallrisiko dazu verwendet wird, Versicherungskosten zu berechnen. Dadurch kann die Energiemarktplattform 2 zusätzlich als Versicherungsunternehmen gegenüber den Energiesystemen 4 auftreten. Beispielsweise erhalten dadurch die Energiesysteme 4 zulässige Abweichungen beziehungsweise Unsicherheiten für ihre Angebote von der Energiemarktplattform 2. Insbesondere wird dadurch die durch das externe Stromnetz 3 bereitgestellte Reserveenergie reduziert. Das ist deshalb der Fall, da Abweichung beziehungsweise Unsicherheiten durch die Energiemarktplattform 2 ganzheitlich ausgewertet werden, sodass eine vorteilhafte Mittelung erfolgt.

Damit die genannte Versicherung nicht ausgenutzt wird, beispielsweise durch eine stetige Angabe von 110 Prozent einer voraussichtlichen Photovoltaikerzeugung, könnten vergleichbar zu einer Versicherung die Gebühren für die einzelnen Energiesysteme (Prosumer) je nach Häufigkeit von Überschreitungen der Abweichungen steigen. Zusätzlich ist ein Monitoring (kontinuierliche Überprüfung) der Überschreitungen hinsichtlich eines Vorsatzes denkbar. So sind beispielsweise je nach Wetterlage größere Abweichungen in der Photovoltaikvorhersage wahrscheinlich (windig, schlechtes Wetter) oder unwahrscheinlich (wolkenloser Himmel). Hierbei kann ebenfalls ein Abgleich der Photovoltaikerzeugung von Prosumern in geographischer Nähe erfolgen.

Zur Berechnung oder Ermittlung des Ausfallrisikos, das die technische Grundlage für die genannte Versicherung ist, übermitteln die Energiesysteme 4 wenigstens Messdaten bezüglich vergangener Energieaustausche sowie Daten bezüglich der Art und Anzahl von technischen Anlagen des Energiesystems 4 an die Energiemarktplattform 2. Basierend auf diesen technischen Daten berechnet die Energiemarktplattform 2 für jedes der Energiesysteme 4 eine probabilistische Vorhersage bezüglich der im Zeitbereich zu erwartenden Energiebereitstellung und/oder den zu erwartenden Energieverbrauch. Das Ausfallrisiko wird für den Zeitbereich basierend auf der probabilistischen Vorhersage durch die Energiemarktplattform ermittelt. Hierbei bilden die übermittelten Daten sogenannte Risiken aus, die die Energiemarktplattform 2 in dem genannten Sinne berücksichtigt und bewertet. Beispielsweise ist das Ausfallrisiko bei einer Stromerzeugung mittels einer Photovoltaikanlage typischerweise höher als mittels eines Blockheizkraftwerkes. Die Art und Anzahl der Anlagen, insbesondere der energietechnischen Anlagen des Energiesystems, stellt somit ein Risiko dar, das anhand der Daten, das heißt der Art und Anzahl der Anlagen, bewertet, quantifiziert und/oder ermittelt wird.

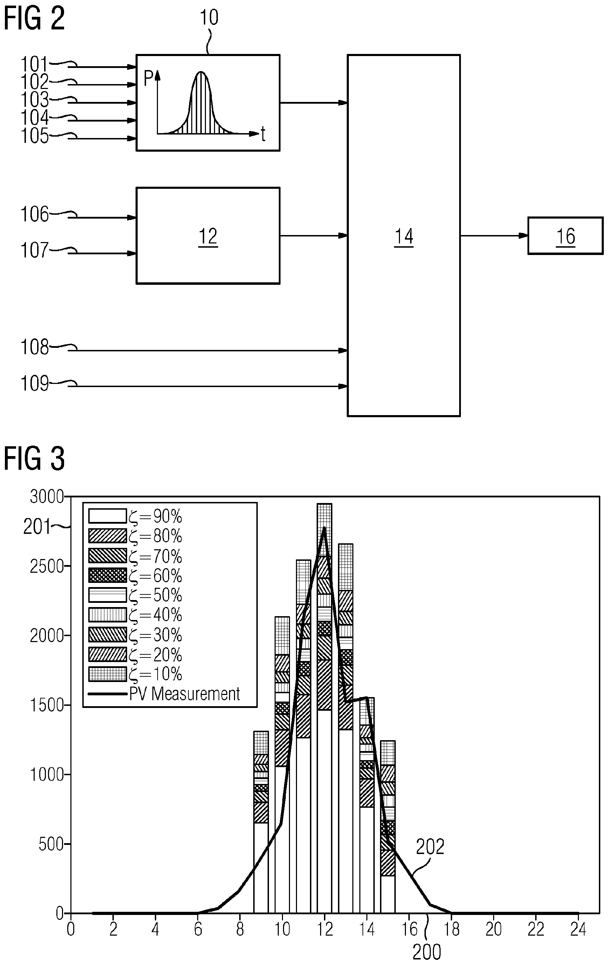

Die Figur 2 zeigt eine Darstellung zur Ermittlung des Ausfallrisikos (Risikoabschätzung) für ein Energiesystem, welches dazu ausgebildet ist, Energie für weitere Energiesysteme bereitzustellen, insbesondere zu gewinnen, und/oder Energie von weiteren Energiesystemen und/oder aus dem Stromnetz zu verbrauchen. Beispielsweise ist das Energiesystem ein Gebäude mit einer Photovoltaikanalage und einem Energiespeicher. Das Energiesystem ist somit als Prosumer ausgebildet und ist Bestandteil, das heißt Teilnehmer, eines lokalen Energiemarktes.

In einem ersten Schritt wird eine Vorhersage für den innerhalb eines zukünftigen Zeitbereiches zu erwartenden Energieaustausches mittels eines probabilistischen Vorhersagemodells, insbesondere mittels einer Quantilsregression, berechnet. Mit anderen Worten ist die Vorhersage eine probabilistische Vorhersage. Die Berechnung der probabilistischen Vorhersage ist mit dem Bezugszeichen 10 gekennzeichnet. Der Zeitbereich kann 15 Minuten sein, sodass die Vorhersage die kommenden 15 Minuten betrifft. Alternativ oder ergänzend kann die Vorhersage einen Tag, insbesondere den kommenden Tag, betreffen (englisch: Day-Ahead). Die Vorhersage umfasst wenigstens den zu erwartenden Energieverbrauch und/oder die zu erwartende Energiebereitstellung, insbesondere die zu erwartende Energiegewinnung. Ergänzend umfasst die Vorhersage die Varianz des zu erwartenden Energieverbrauches und/oder die Varianz der zu erwartenden Energiebereitstellung und/oder die Wahrscheinlichkeitsverteilung des Energieaustausches und/oder die Wahrscheinlichkeitsverteilung der Energiebereitstellung innerhalb des Zeitbereiches. Eine exemplarische Vorhersage für die zu erwartende Leistung über einen Tag ist durch das Diagramm in der Box 10 verdeutlicht. Dieses wird unter Figur 3 näher erläutert.

Für die Vorhersage und somit für die Ermittlung des Ausfallrisikos sind Eingangsparameter erforderlich. Vorliegend sind dies vergangene Messwerte 101, beispielsweise vergangene Lastprofile, die Art und Anzahl der energietechnischen Anlagen 102, Wetterdaten 103, anlagenspezifische Daten 104 und vergangene Angebote 105. Die genannten Daten 101,...,105 werden vom Energiesystem an die Energiemarktplattform übermittelt und bei der Berechnung der Vorhersage 10 verwendet.

Im vorliegenden Ausführungsbeispiel wird weiterhin eine bisherige Liefertreue des Energiesystems zur Ermittlung des Ausfallrisikos herangezogen. Die Berechnung der Liefertreue erfolgt mittels eines Zuverlässigkeitswertes des Energiesystems, insbesondere mittels eines Vergessensfaktors. Die Berechnung des Zuverlässigkeitswertes beziehungsweise der Liefertreue ist mit dem Bezugszeichen 12 gekennzeichnet. Zur Berechnung 12 werden vergangene Messwerte beziehungsweise vergangene Messdaten 106 sowie vergangene Angebote 107 verwendet. Dadurch wird der Zuverlässigkeitswert des Energiesystems berechnet, der die bisherige Liefertreue des Energiesystems kennzeichnet. Es erfolgt somit eine Wertung des Energiesystems bezüglich vergangener beziehungsweise bisheriger Energieaustausche (englisch: Scoring).

Die berechnete probabilistische Vorhersage sowie die berechnete bisherige Liefertreue werden zur Ermittlung des Ausfallrisikos verwendet. Mit anderen Worten erfolgt die Ermittlung des Ausfallrisikos, die mit dem Bezugszeichen 14 gekennzeichnet ist, mittels der berechneten probabilistischen Vorhersage und der berechneten bisherigen Liefertreue beziehungsweise dem berechneten bisherigen Zuverlässigkeitswert. Ergänzend werden Angebote für den kommenden Tag 108 sowie externe Vergütungen, beispielsweise für aus einem Stromnetz zu beziehende Energie und/oder in einem Stromnetz einzuspeisende Energie, zur Ermittlung des Ausfallrisikos 14 herangezogen.

Basierend auf der Ermittlung des technischen Ausfallrisikos 14, wobei das Ausfallrisiko die Wahrscheinlichkeit eines Ausfalls der innerhalb des Energiemarktes angebotenen Energiemenge technisch kennzeichnet, können Versicherungskosten mittels der Energiemarktplattform für bestimmte Energiemengen ermittelt werden. Diese Ermittlung ist mit dem Bezugszeichen 16 gekennzeichnet. Die vorliegende Ermittlung des Ausfallrisikos 14 stellt somit die technische Grundlage für die Ermittlung der Versicherungskosten 16 bereit.

Die Figur 3 zeigt eine exemplarische probabilistische Vorhersage für eine Photovoltaikanlage.

An der Abszisse 200 sind die Stunden eines Tages aufgetragen. An der Ordinate 201 ist die bereitgestellte Leistung in Watt aufgetragen.

Für jede Stunde des Tages wird eine probabilistische Vorhersage berechnet. Hierbei sind Quantile der Wahrscheinlichkeitsverteilung von 10 Prozent bis 90 Prozent in 10 Prozentschritten durch eine verschiedene Schraffierung zur jeweiligen Stunde dargestellt. Der Zeitbereich kann kleiner als eine Stunde sein, insbesondere 15 Minuten.

Der tatsächliche Verlauf der durch die Photovoltaikanlage erzeugten Leistung über den Tag ist mit dem Bezugszeichen 202 gekennzeichnet. Hierbei ist erkennbar, dass gerade in den Bereichen von Sonnenaufgang und Sonnenuntergang deutliche Abweichungen zum erwartenden Verlauf beziehungsweise bezüglich der Wahrscheinlichkeitsverteilung auftreten.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| | |
|---|---|
| 2 | Energiemarktplattform |
| 3 | externes Stromnetz |
| 4 | Energiesystem |
| 10 | Berechnung der probabilistischen Vorhersage |
| 12 | Berechnung des Zuverlässigkeitswertes |
| 14 | Ermittlung des Ausfallrisikos |
| 16 | Berechnung des Versicherungsbeitrages |
| 40 | Vorhersage |
| 41 | Tatsächlicher Leistungsverlauf |
| 42 | Differenz |
| 101 | vergangene Messdaten |
| 102 | Art und Anzahl von technischen Anlagen |
| 103 | Wetterdaten |
| 104 | anlagenspezifische Daten |
| 105 | vergangen Angebote |
| 106 | vergangene Messdaten |
| 107 | vergangene Angebote |
| 108 | Angebote |
| 109 | externe Kosten |
| 200 | Abszisse |
| 201 | Ordinate |
| 202 | Messkurve |

**Patentansprüche**

1.   Verfahren zur Ermittlung eines Ausfallrisikos einer von einem Energiesystem (4) im Rahmen eines Angebotes innerhalb eines Zeitbereiches bereitzustellenden und/oder zu verbrauchenden Energiemenge in Abhängigkeit von Risiken, die mittels Daten (101, ..., 105) aus dem Energiesystem (4) selbst und/der dem Energiesystem (4) aus seiner Umgebung zufließenden Daten (101, ..., 105) bestimmt werden, wobei das Energiesystem (4) die Daten (101, ..., 105) erfasst und/oder verarbeitet und an eine Energiemarktplattform (2) zur Ermittlung des Ausfallrisikos übermittelt, wobei

- das Energiesystem (4) wenigstens Messdaten (101) bezüglich vergangener Energieaustausche sowie Daten (102) bezüglich der Art und Anzahl von technischen Anlagen des Energiesystems (4) an die Energiemarktplattform (2) übermittelt;
- durch die Energiemarktplattform (2) basierend auf den übermittelnden Daten (101, 102) für das Energiesystem (4) eine probabilistische Vorhersage bezüglich der im Zeitbereich zu erwartenden Energiebereitstellung und/oder den zu erwartenden Energieverbrauch berechnet wird; und
- das Ausfallrisiko für den Zeitbereich basierend auf der probabilistischen Vorhersage ermittelt wird.

2. Verfahren gemäß Anspruch 1, bei dem ein Zeitbereich von einer Stunde, von höchstens 30 Minuten, insbesondere von höchstens 15 Minuten, verwendet wird.

3. Verfahren gemäß Anspruch 1 oder 2, bei dem das Energiesystem (4) ergänzend Wetterdaten (103), anlagenspezifischen Daten (104), Leistungsbeschränkungen und/oder vergangene Angebote (105) an die Energiemarktplattform (2) übermittelt, und die Energiemarktplattform (2) diese zusätzlich zur Berechnung der probabilistischen Vorhersage verwendet.

4. Verfahren gemäß einem der vorhergehenden Ansprüche, bei dem die probabilistische Vorhersage mittels eines probabilistischen Vorhersagemodells, insbesondere mittels einer Quantilsregression, ermittelt wird.

5. Verfahren gemäß einem der vorhergehenden Ansprüche, bei dem ein energiesystemspezifischer Zuverlässigkeitswert für vergangene Angebote berechnet wird, und bei dem der berechnete Zuverlässigkeitswert zur Ermittlung des Ausfallrisikos verwendet wird.

6. Verfahren gemäß einem der vorhergehenden Ansprüche, bei dem zur Ermittlung des Ausfallrisikos an die lokale Energiemarktplattform (2) durch weitere Energiesysteme (4) übermittelte Daten berücksichtigt werden, wobei hierzu positive und negative Unsicherheiten bezüglich der zwischen mehreren Energiesystemen auszutauschenden Energiemengen aggregiert werden.

7. Verfahren gemäß einem der vorhergehenden Ansprüche, bei dem das ermittelte Ausfallrisiko zur Berechnung eines Versicherungsbeitrages für das eine oder mehrere Energiesysteme (4) verwendet wird.

8. Energiemarktplattform (2), wobei die Energiemarktplattform (2) dazu ausgestaltet ist, Angebote von mehreren Energiesystemen (4) für eine jeweilige innerhalb eines Zeitbereiches bereitzustellende und/oder zu verbrauchende Energiemenge von den Energiesystemen (4) zu empfangen und basierend auf den empfangenen Angeboten den Energieaustausch zwischen den Energiesystemen (4) zu steuern, wobei die Energiemarktplattform (2) weiterhin dazu ausgestaltet ist, ein jeweiliges Ausfallrisiko einer von einem der Energiesysteme (4) im Rahmen des zugehörigen Angebotes zu bereitzustellende und/oder zu vebrauchende Energiemenge in Abhängigkeit von Risiken zu ermitteln, wobei die Risiken mittels Daten (101, ..., 105) aus den Energiesystemen (4) selbst und/der den Energiesystemen (4) aus ihrer Umgebung zufließenden Daten (101, ..., 105) bestimmt werden, wobei jedes der Energiesysteme (4) die jeweiligen Daten (101, ..., 105) erfasst und/oder verarbeitet und an die Energiemarktplattform (2) zur Ermittlung des Ausfallrisikos übermittelt, wobei

- jedes Energiesystem (4) wenigstens Messdaten (101) bezüglich vergangener Energieaustausche sowie Daten (102) bezüglich der Art und Anzahl ihrer technischen Anlagen an die lokale Energiemarktplattform (2) übermittelt; wobei
- die lokale Energiemarktplattform (2) dazu ausgestaltet ist, basierend auf den übermittelnden Daten (101, 102) für das jeweilige Energiesystem (4) oder für die Energiesysteme (4) eine probabilistische Vorhersage bezüglich der im Zeitbereich zu erwartenden Energiebereitstellung und/oder den zu erwartenden Energieverbrauch zu berechnen; und
- das Ausfallrisiko für den Zeitbereich basierend auf der probabilistischen Vorhersage zu ermitteln.

FIG 1

EP 3 872 719 A1

# FIG 2

# FIG 3

Europäisches
Patentamt

European
Patent Office

Office européen
des brevets

# EUROPÄISCHER RECHERCHENBERICHT

Nummer der Anmeldung

EP 20 15 9803

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Wikipedia: "Electricity market - Wikipedia", , 6. Dezember 2019 (2019-12-06), XP055686123, Gefunden im Internet: URL:https://en.wikipedia.org/w/index.php?title=Electricity_market&oldid=929598225 [gefunden am 2020-04-16] * Seite 3 - Seite 6 * ----- | 1-8 | INV. G06Q10/04 G06Q50/06 H02J3/00 G06Q10/06 |
| X | CN 110 472 851 A (STATE GRID SHANGHAI MUNICIPAL ELECTRIC POWER CO) 19. November 2019 (2019-11-19) * Zusammenfassung; Anspruch 1 * * Absatz [0005] - Absatz [0046] * ----- | 1-8 | |
| X | EP 2 523 150 A1 (GEN ELECTRIC [US]) 14. November 2012 (2012-11-14) * Absatz [0015] - Absatz [0082]; Abbildungen 1-7 * ----- | 1-8 | |
| X | WO 2019/093009 A1 (HITACHI LTD [JP]) 16. Mai 2019 (2019-05-16) * Absatz [0009] - Absatz [0053] * ----- | 1-8 | RECHERCHIERTE SACHGEBIETE (IPC) G06Q H02J |
| X | KR 2019 0140296 A (KOREA SOUTH EAST POWER CO LTD [KR]; VGEN CO LTD [KR]) 19. Dezember 2019 (2019-12-19) * Absatz [0009] - Absatz [0073] * ----- -/-- | 1-8 | |

Der vorliegende Recherchenbericht wurde für alle Patentansprüche erstellt

| Recherchenort | Abschlußdatum der Recherche | Prüfer |
|---|---|---|
| München | 17. April 2020 | Lavin Liermo, Jesus |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes
    Dokument

EPO FORM 1503 03.82 (P04C03)

Seite 1 von 2

| | | Europäisches Patentamt / European Patent Office / Office européen des brevets | **EUROPÄISCHER RECHERCHENBERICHT** | **Nummer der Anmeldung** EP 20 15 9803 |

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Wikipedia: "Smart grid", , 5. Dezember 2017 (2017-12-05), XP055540199, Gefunden im Internet: URL:https://en.wikipedia.org/w/index.php?title=Smart_grid&oldid=813894100 [gefunden am 2019-01-10] * Seite 6 - Seite 8 * ----- | 1-8 | |
| X | US 2019/385182 A1 (PRICE DANIEL GREGORY [US] ET AL) 19. Dezember 2019 (2019-12-19) * Absatz [0023] - Absatz [0069] * ----- | 1-8 | |
| X | US 2019/147551 A1 (SUN HONGBO [US] ET AL) 16. Mai 2019 (2019-05-16) * Absatz [0049] - Absatz [0121] * ----- | 1-8 | |
| X | US 2018/366949 A1 (MCKEAG TORRANCE JAMES [US] ET AL) 20. Dezember 2018 (2018-12-20) * Absatz [0016] - Absatz [0052] * ----- | 1-8 | RECHERCHIERTE SACHGEBIETE (IPC) |
| X | JP 2006 331229 A (TOSHIBA CORP) 7. Dezember 2006 (2006-12-07) * Absatz [0008] - Absatz [0064] * ----- | 1-8 | |
| X | CN 109 726 875 A (UNIV NORTH CHINA ELECTRIC POWER) 7. Mai 2019 (2019-05-07) * Absatz [0005] - Absatz [0053] * ----- | 1-8 | |
| A | DE 10 2014 222687 A1 (SIEMENS AG [DE]) 12. Mai 2016 (2016-05-12) * Anspruch 1 * ----- | 1-8 | |

Der vorliegende Recherchenbericht wurde für alle Patentansprüche erstellt

| Recherchenort | Abschlußdatum der Recherche | Prüfer |
|---|---|---|
| München | 17. April 2020 | Lavin Liermo, Jesus |

**ANHANG ZUM EUROPÄISCHEN RECHERCHENBERICHT**
**ÜBER DIE EUROPÄISCHE PATENTANMELDUNG NR.**

EP 20 15 9803

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-04-2020

| Im Recherchenbericht angeführtes Patentdokument | Datum der Veröffentlichung | Mitglied(er) der Patentfamilie | Datum der Veröffentlichung |
|---|---|---|---|
| CN 110472851 A | 19-11-2019 | KEINE | |
| EP 2523150 A1 | 14-11-2012 | CN 102830666 A<br>EP 2523150 A1<br>JP 6159059 B2<br>JP 2012238308 A<br>US 2012290104 A1 | 19-12-2012<br>14-11-2012<br>05-07-2017<br>06-12-2012<br>15-11-2012 |
| WO 2019093009 A1 | 16-05-2019 | JP 2019091106 A<br>WO 2019093009 A1 | 13-06-2019<br>16-05-2019 |
| KR 20190140296 A | 19-12-2019 | KEINE | |
| US 2019385182 A1 | 19-12-2019 | US 2019385182 A1<br>WO 2019241554 A1 | 19-12-2019<br>19-12-2019 |
| US 2019147551 A1 | 16-05-2019 | US 2019147551 A1<br>WO 2019092905 A1 | 16-05-2019<br>16-05-2019 |
| US 2018366949 A1 | 20-12-2018 | KEINE | |
| JP 2006331229 A | 07-12-2006 | JP 4660281 B2<br>JP 2006331229 A | 30-03-2011<br>07-12-2006 |
| CN 109726875 A | 07-05-2019 | KEINE | |
| DE 102014222687 A1 | 12-05-2016 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518369 A1
- EP 0700009 B1